# EUROPEAN PATENT APPLICATION

(11) **EP 2 620 788 A1**
(43) Date of publication of application: **31.07.2013**
(21) Application number: 12193280.0
(22) Date of filing: 19.11.2012
(51) Int. Cl.: G01S 19/24

(54) **Controlling fast acquisition hardware to pre-position a satellite to constrain baseband searches**

(30) Priority: 30.01.2012 US 201213361415
(71) Applicant: Honeywell International Inc., Morristown, NJ 07962-2245 (US)
(72) Inventor: Vickers, Stephen, Morristown, NJ New Jersey 07962-2245 (US); Vukas, Mike, Morristown, NJ New Jersey 07962-2245 (US)
(74) Representative: Houghton, Mark Phillip

(57) **Abstract**

A system of searching for and acquiring a satellite signal is provided. The system comprises a system controller, a receiver controller operatively coupled to the system controller and configured to identify one or more satellites for which a search is to be conducted, and a fast acquisition module in operative communication with the receiver controller. The fast acquisition module is configured to receive a satellite search request from the receiver controller and divide the search request into a plurality of smaller search space requests. A hardware search device is in operative communication with the fast acquisition module. The hardware search device is configured to conduct a search for a satellite based on one or more of the search space requests and send search results back to the fast acquisition module. A baseband processor is operatively coupled to the receiver controller and configured to track one or more satellites based on the search results.

## Description

### STATEMENT REGARDING FEDERALLY SPONSORED RESEARCH OR DEVELOPMENT

This invention was made with Government support under Contract No. NNJ06TA25C, Subcontract No. RH6-118204, awarded by the NASA Johnson Space Center. The Government has certain rights in the invention.

### BACKGROUND

When adapting (Global Positioning System) GPS sensor technology from an aviation environment to an outer space environment, the search window for a satellite's frequency and code phase is greatly increased. This problem is also magnified when multiple antennas are used.

The traditional aviation approach to acquiring satellites employs a method that generally includes using the almanac/ephemeris data of a satellite to preselect only visible satellites and pre-compute the position of the satellites. This position data is then fed to baseband tracking channels. This approach is too slow for outer space applications as the search window for outer space is multiple times larger than in aviation. Therefore, a search that could be completed in about 20-30 seconds in an aviation environment might take about 5-10 minutes in an outer space environment. In addition to not being able to meet outer space application Time to First Fix (TTFF) requirements, a satellite will likely have moved to beyond the search window or to a position in the search window that has already been searched. This could cause a satellite to never be found, regardless of the amount of searching time.

### SUMMARY

A system of searching for and acquiring a satellite signal is provided. The system comprises a system controller, a receiver controller operatively coupled to the system controller and configured to identify one or more satellites for which a search is to be conducted, and a fast acquisition module in operative communication with the receiver controller. The fast acquisition module is configured to receive a satellite search request from the receiver controller and divide the search request into a plurality of smaller search space requests. A hardware search device is in operative communication with the fast acquisition module. The hardware search device is configured to conduct a search for a satellite based on one or more of the search space requests and send search results back to the fast acquisition module. A baseband processor is operatively coupled to the receiver controller and configured to track one or more satellites based on the search results.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram showing an overview of a system of searching for and acquiring a satellite signal according to one embodiment;

Figure 2 is a block diagram illustrating further details of a portion of the system of Figure 1;

Figure 3 is a block diagram illustrating further details of another portion of the system of Figure 1; and

Figures 4A and 4B are timing diagrams for alternative searching approaches that can used in the system of Figure 1.

### DETAILED DESCRIPTION

In the following detailed description, reference is made to the accompanying drawings in which is shown by way of example specific illustrative embodiments. It is to be understood that other embodiments may be utilized and that mechanical and electrical changes may be made. The following detailed description is, therefore, not to be taken in a limiting sense.

A method and system for using fast acquisition hardware to pre-position a satellite in order to highly constrain baseband searches for the satellite is provided. The present method can be implemented in a software-based algorithm, which meets the demands of acquiring satellites in an outer space environment.

NASA's Goddard Space Flight Center has developed Fast Acquisition (FAQ) hardware capable of taking a snapshot of the GPS radio frequency (RF) spectrum and calculating a precise position of a single satellite. This effectively reduces the search window to a tiny fraction of its entirety. The position can then be used in traditional aviation methods and can be found very quickly, as several searches over the complete search window can be completed in less than about 1 second. The FAQ hardware includes a strong signal mode and a weak signal mode, which are described further hereafter. Further details related to the FAQ hardware is disclosed in U.S. Patent No. 7,548,199, entitled RADIATION-HARDENED FAST ACQUISITION/WEAK SIGNAL TRACKING SYSTEM AND METHOD, the disclosure of which is incorporated by reference.

The present approach provides an algorithm to optimize use of the FAQ hardware. This algorithm also optimizes use of the tracking channels based on data returned from the FAQ hardware. In order to optimize the FAQ hardware, the algorithm breaks down a search for a single satellite into smaller more manageable searches that the FAQ hardware is capable of handling. The algorithm can search across multiple antennas and accounts for the destructive interference and loss of power during a navigation bit transition in the weak signal mode operation of the FAQ hardware. In one embodiment, the FAQ hardware is able to acquire GPS and satellite-based augmentation system (SBAS) signals through two separate RF antenna ports.

The present algorithm can be implemented in any GPS sensor that has the FAQ hardware. In one implementation, this algorithm may be used in the acquisition of satellites under the conditions where almanac, ephemeris, and position data may not be available. This algorithm, in conjunction with the FAQ hardware, can be used to very quickly scan the entire sky for every satellite's Doppler frequency and code phase in a fraction of the time it would take a traditional GPS sensor. These results can then be passed to the baseband processor for initializing of tracking channels.

In another implementation, the present algorithm may be used when the GPS sensor has been fully initialized or has a valid navigation solution. Both of these conditions refer to when the sensor knows where it is (or thinks it knows) and has a list of satellites that are visible, meaning that their approximate Doppler frequency and code phase are known. The sensor can use this information to constrain the frequency which the fast acquisition software has to search, resulting in reduced search time. This use is especially valuable when employing the FAQ hardware's weak signal mode.

A method of searching for and acquiring a satellite signal according to the present approach generally includes identifying one or more satellites for which a search is to be conducted, generating a search request for one or more of the identified satellites, and dividing the search request into a plurality of smaller search space requests. A hardware search device such as the FAQ hardware is then commanded to search for the one or more satellites based on one of the smaller search space requests, and a search result is retrieved from the hardware search device. A determination is then made whether the satellite's acquisition is complete based on the returning search results. If the satellite acquisition is complete, the acquisition results are stored in a results queue. The acquisition results are retrieved from the results queue and used to track one or more satellites.

In the foregoing method, if the satellite acquisition is not complete upon retrieval of the search result, a determination is made whether more of the search space requests are available. If more search space requests are available, the next search space request is retrieved from a search queue. A search command is then sent to the hardware search device, with the search command based on the next search space request. A next search result is retrieved from the hardware search device, and a determination is made whether satellite acquisition is complete based on the next search result. If the satellite acquisition is complete, the acquisition results are stored in the results queue. If the satellite acquisition is again not complete, the search is repeated with another search space request until the search is completed.

The present method is advantageous in that it allows TTFF requirements to be met in a fraction of the time that it takes traditional GPS sensors, thus increasing GPS availability and safety. This advantage is especially apparent when initialization data that is not available.

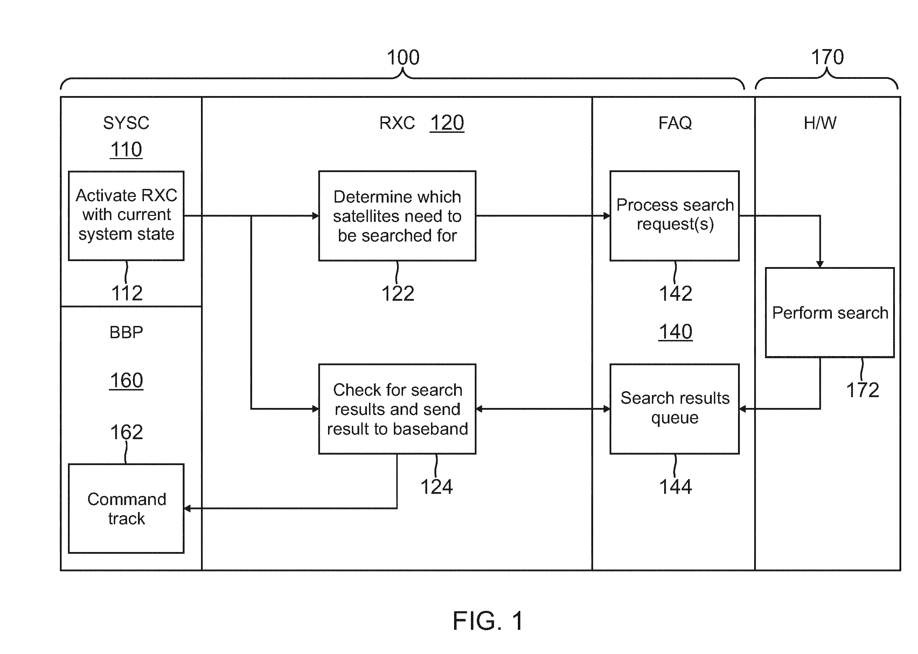

Figure 1 is a block diagram showing an overview of a system 100 for implementing an algorithm to use a fast acquisition hardware (H/W) device 170 to pre-position a satellite according to one embodiment. The system 100 generally includes a system controller (SYSC) 110, a receiver controller (RXC) 120, a fast acquisition (FAQ) module 140, and a baseband processor (BBP) 160. The FAQ module 140 is in operative communication with hardware device 170. The FAQ module can be implemented as a software device driver for low level control over hardware device 170.

The hardware device 170 includes an application-specific integrated circuit (ASIC) that is divided up into two sections, including an acquisition section and a Fast Fourier Transform (FFT) section. The FAQ module 140 interfaces with the acquisition section and FFT section of the hardware device to acquire the satellite signals. The hardware device 170 can correspond to the FAQ hardware disclosed in U.S. Patent No. 7,548,199 discussed previously.

In a general method of operation of system 100, system controller 110 activates receiver controller 120 with a current system state (block 112) as shown in Figure 1. For example, system controller 110 can instruct RXC 120 to run every second. The receiver controller 120 then determines which satellites need to be searched for (block 122). For example, a list of satellites can be created for which a search is to be conducted. If there is not enough information to construct the list, then a search will include every satellite. One or more satellite search requests are sent by receiver controller 120 to FAQ module 140, which processes the search requests (block 142).

A search command is sent by FAQ module 140 to hardware device 170, which then performs the search (block 172). The search results are sent back to FAQ module 140, which stores the search results in a queue (block 144). The receiver controller 120 checks for any search results in the queue, and sends the results to baseband processor 160 (block 124). The receiver controller 120 can also check for search results (block 124) upon activation by system controller 110. A command to track the satellite is then issued by baseband processor 160 (block 162)

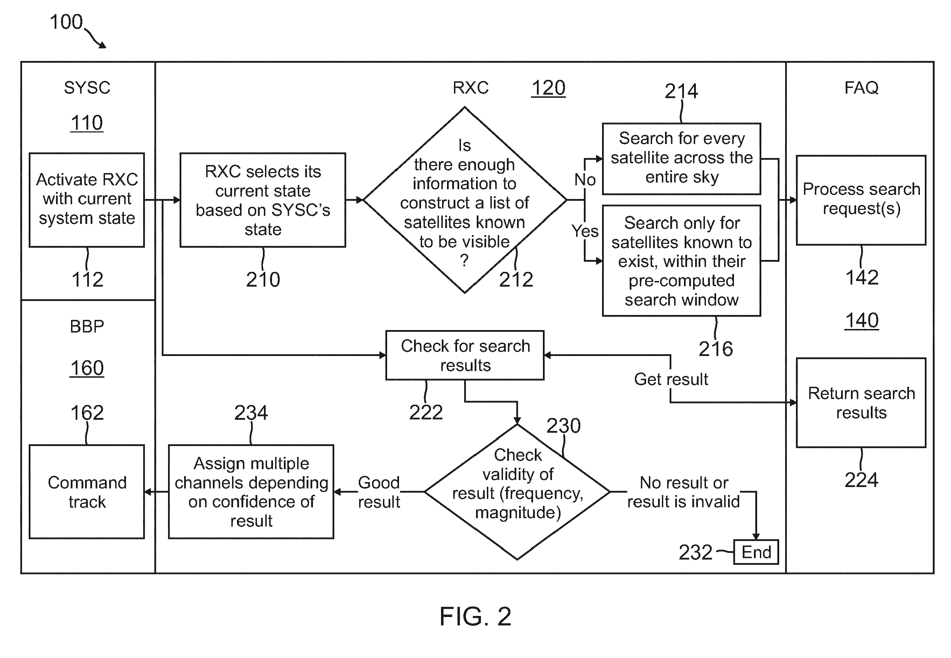

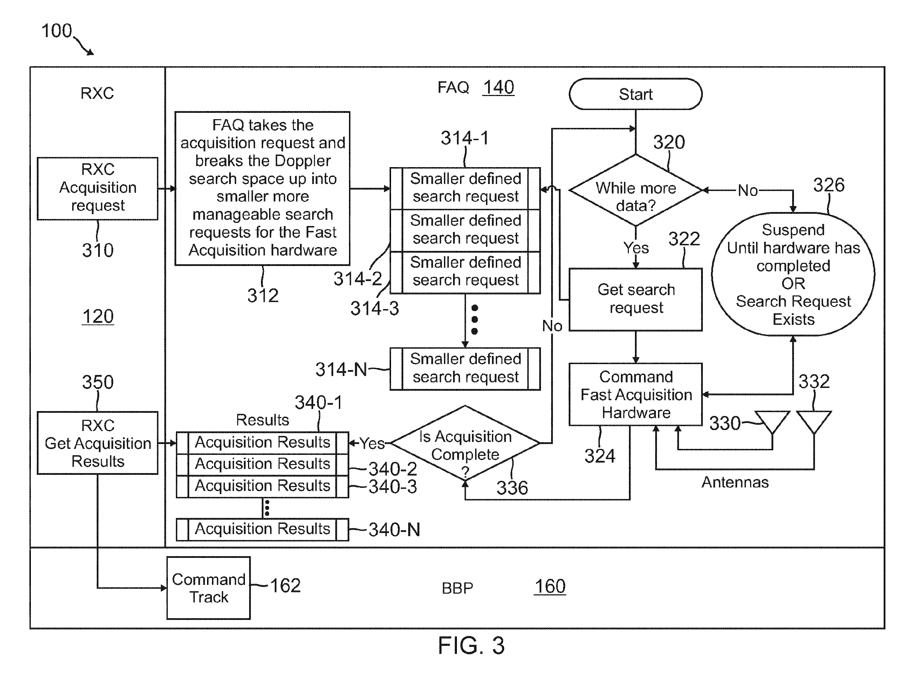

Figures 2 and 3 are block diagrams illustrating further details of the operation of system 100. Once system controller 110 activates receiver controller 120 (block 112), receiver controller 120 selects its current state based on the state of system controller 110 (block 210), as shown in Figure 2. The receiver controller 120 then determines if there is enough information to construct a list of satellites known to be visible (block 212). If there is not enough information, a request is made to search for every satellite across the entire sky (block 214). If enough information is available, a request is made to search only for satellites known to exist, within their pre-computed search window (block 216). A best approximation of each satellite's current frequency can be calculated. This can be precise if the current position and velocity of both the GPS sensor and satellite are known, coarse if the current sensor's velocity is not known (but everything else is), or the entire search window. Each search request is then passed off to FAQ module 140.

The search requests are processed by FAQ module 140 (block 142), which is described in further detail hereafter with respect to Figure 3. The FAQ module 140 can accept acquisition commands from receiver controller 120 that contain pseudorandom noise (PRN), minimum Doppler frequency, maximum Doppler frequency, and hardware operation mode. The receiver controller 120 checks for available search results (block 222), and gets any search results returned by FAQ module 140 (block 224). The receiver controller 120 can also check for search results (block 222) upon activation by system controller 110.

The FAQ module 140 provides the fast acquisition capability to acquire one or more satellites. As shown in Figure 3, when a search and acquisition request (block 310) is taken by FAQ module 140 from receiver controller 120, the Doppler search space is broken up into smaller, more manageable search requests for execution by the fast acquisition hardware device (block 312). The fast acquisition hardware is not capable of performing a search across the entire Doppler frequency range at once. Thus, the search request is broken up into smaller defined search space requests and saved in a search request queue for individual processing (blocks 314-1, 314-2, 314-3... 314-N).

At the start of the search request process, FAQ module 140 gets the first smaller search space request (block 322) from the search queue (e.g., block 314-1), and sends a search command based on the search space request to the hardware search device through an interface (block 324). The interface acts as a low level device driver for the hardware search device. In one embodiment, the hardware search device can be operatively coupled to a pair of antennas 330 and 332, which are configured to receive GPS signals. Such an antenna configuration is particularly useful when the GPS receiver is deployed in an outer space vehicle.

The acquisition section and FFT section of the hardware search device combine to search RF data across multiple frequencies for a satellite signal that is strong enough to track. If a signal is found, the acquisition section reports the frequency, code phase, and amplitude (strength) of the signal. The results of the individual processed searches are analyzed to determine where the maximum L1 C/A (coarse/acquisition) signal correlation peak was found and on which antenna it was found.

When the search is complete, the hardware search device returns a search result through the interface and a determination is made by FAQ module 140 whether the acquisition is complete (block 336). If the acquisition is not complete, the search request process is repeated. A determination is made whether there is any more data to process (block 320). If more search request data is available, FAQ module 140 gets the next search request (block 322) from the search queue (e.g., block 314-2), and sends a search command based on the next search request to the hardware search device (block 324). The FAQ module 140 can suspend the search request process until the hardware search device has completed a search, or until a search request exists (block 326). The foregoing search request process is repeated while more search request data exists until the search queue is empty. For example, the search can be repeated for each of the smaller defined search space requests (blocks 314-3,... 314-N).

Once the acquisition is complete (block 336), the acquisition results are sent to a results queue that stores the acquisition results (blocks 340-1, 340-2, 340-3 ... 340-N). The FAQ module 140 places a results message on the queue for the receiver controller 120 to retrieve (block 350). The results queue contains the following information: satellite PRN; signal magnitude (maximum correlation peak value); Doppler frequency (Doppler where the maximum correlation peak was found); millisecond timestamp (timestamp when maximum correlation peak was found); acquisition mode (strong or weak signal mode commanded by RXC 120); and antenna identification (the antenna on which the maximum correlation peak was found). It should be noted that these are the data elements captured from an RXC acquisition request. The results queue can contain multiple messages.

Returning to Figure 2, the validity of the search results are checked with respect to frequency and magnitude (block 230). If there are no search results or the search results are invalid, the search process comes to an end (block 232). If the search results are good (valid), multiple baseband tracking channels can be assigned depending on confidence in the results (block 234). A determination can be made as to how many baseband tracking channels to assign to each satellite based on the confidence in the satellite position and the frequency/magnitude of the signal. The command to track the satellite is then issued by baseband processor 160 (block 162)

A command to track the satellite is then sent to baseband processor 160 (block 162), which assigns the satellite to one or more baseband tracking channels.

### Strong Signal Mode

In the strong signal mode of the FAQ hardware, the acquisition is based on a single 1 ms block of input samples. This 1 ms block optionally is buffered and then FFT based correlations sweep across the entire Doppler space (Doppler removal) at the desired granularity. Strong mode signal searches are performed by searching ten Doppler frequencies spaced at intervals of 1 KHz from the base frequency sent to the hardware. Four commanded searches are performed to fill in the four 250-Hz bands within the 1 KHz harmonic spacing, and then the process is repeated with the harmonic positions incremented by 10 KHz until the entire Doppler range has been searched. Each search in the strong signal mode employs a 1 ms coherent integration time.

The FAQ hardware breaks up the RXC acquisition request if commanded in strong signal mode as follows: a search will begin at the minimum Doppler frequency; a search shall end at the maximum Doppler frequency; each hardware acquisition will search ten 1 KHz harmonics (configurable); each hardware acquisition will be shifted by 250 Hz until the maximum Doppler frequency has been searched (configurable). Further details related to the strong signal mode can be found in U.S. Patent No. 7,548,199.

### Weak Signal Mode

In the weak signal mode of the FAQ hardware, the coherent integration interval is increased to 10 ms, which is 10 time longer than in the strong signal mode, while using the same computing structures as were employed for the 1 ms integration in the strong signal mode. A 10 ms limitation is imposed by the 20 ms width of the data bit associated with the navigation message. The presence of a data bit transition during a coherent integration interval can result in destructive interference and loss of signal power. In addition, the ten 1 ms integration periods are contiguous.

Consequently, in the weak signal mode, ten successive 1 ms data segments are processed, each producing correlation functions for the same six 1-KHz-spaced harmonics. These correlation functions are saved in memory and after 10 ms, processing of incoming data is suspended and attention is devoted to properly combining the 10 correlation functions for each harmonic. That combining process is completed within the next 10 ms, so that the process can begin again at another set of frequencies. Thus, every 20 ms, the search is completed for a 250 Hz band about each of the six 1-KHz-spaced harmonics. That constitutes one commanded search in the weak signal mode. Four commanded searches are performed to fill in the four 250-Hz bands within the 1 KHz harmonic spacing, and then the process is repeated with the harmonic positions incremented by 6 KHz until the entire Doppler range has been searched.

The FAQ hardware breaks up the RXC acquisition request if commanded in weak signal mode as follows: a search will begin at the minimum Doppler frequency; a search will end at the maximum Doppler frequency; each hardware acquisition will search six 1-KHz harmonics; each hardware acquisition will be shifted by 250 Hz until the maximum Doppler has been searched.

Further details related to the weak signal mode can be found in U.S. Patent No. 7,548,199.

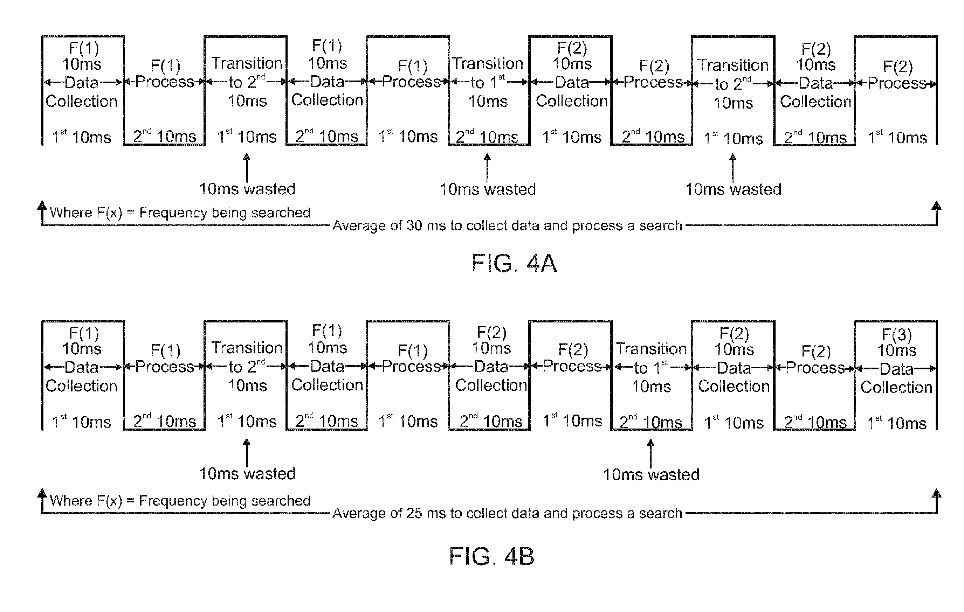

In using the weak signal mode during acquisition, the location of the data bit boundary is unknown, so the search can be performed first using an arbitrarily chosen first 10 ms set of ten contiguous 1-ms data segments, and then the process is repeated for the alternative second 10 ms set of ten 1-ms data segments. This alternating search approach is illustrated in the timing diagram of Figure 4A. The alternating search approach adds to the time required to complete the search.

To increase searching efficiency, a back-to-back search approach can be implemented as shown in Figure 4B. In the back-to-back search approach, the search is performed using back-to-back first 10 ms sets of ten contiguous 1-ms data segments, and then the process is repeated for back-to-back alternative second 10 ms sets of ten 1-ms data segments. This method provides fewer transitions between the first 10 ms sets and the second 10 ms sets. Each time there is a transition, 10 ms is wasted to perform the transition.

The alternating search approach averages about 30 ms to collect data and process a search, whereas the back-to-back search approach averages about 25 ms to collect data and process a search. Hence, the back-to-back search approach is about 16.67% more efficient than the alternating search approach.

A processor for use in the present system can be implemented using software, firmware, hardware, or any appropriate combination thereof, as known to one of skill in the art. By way of example and not limitation, hardware components for the processor can include one or more microprocessors, memory elements, digital signal processing (DSP) elements, interface cards, and other standard components known in the art. Any of the foregoing may be supplemented by, or incorporated in, specially-designed application-specific integrated circuits (ASICs) or field programmable gate arrays (FPGAs). The processor includes or functions with software programs, firmware, or other computer readable instructions for carrying out various process tasks, calculations, and control functions, used in the present method. These instructions are typically tangibly embodied on any appropriate computer program product that includes a computer readable medium used for storage of computer readable instructions or data structures.

The present method can be implemented with any available computer readable storage media that can be accessed by a general purpose or special purpose computer or processor, or any programmable logic device. Suitable computer readable media may include storage or memory media such as magnetic or optical media. For example, storage or memory media may include conventional hard disks, Compact Disk - Read Only Memory (CD-ROM), DVDs, volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), and the like), Read Only Memory (ROM), Electrically Erasable Programmable ROM (EEPROM), flash memory, Blu-ray discs, and the like. Combinations of the above are also included within the scope of computer readable media.

The present methods can be implemented by computer executable instructions, such as program modules, which are executed by at least one processor. Generally, program modules include routines, programs, objects, data components, data structures, algorithms, and the like, which perform particular tasks or implement particular abstract data types.

### EXAMPLE EMBODIMENTS

Example 1 includes a system of searching for and acquiring a satellite signal, the system comprising: a system controller; a receiver controller operatively coupled to the system controller and configured to identify one or more satellites for which a search is to be conducted; a fast acquisition module in operative communication with the receiver controller, the fast acquisition module configured to receive a satellite search request from the receiver controller and divide the search request into a plurality of smaller search space requests; a hardware search device in operative communication with the fast acquisition module and configured to conduct a search for a satellite based on one or more of the search space requests and send search results back to the fast acquisition module; and a baseband processor operatively coupled to the receiver controller and configured to track one or more satellites based on the search results.

Example 2 includes the system of Example 1, wherein the receiver controller is further configured to construct a list of satellites known to be visible.

Example 3 includes the system of any of Examples 1-2, wherein the receiver controller is further configured to check for search results upon activation by the system controller.

Example 4 includes the system of any of Examples 1-3, wherein the receiver controller is further configured to retrieve acquisition results from a results queue in the fast acquisition module.

Example 5 includes the system of any of Examples 1-4, wherein the fast acquisition module is further configured to: (a) retrieve one of the smaller search space requests from a search queue; (b) send a search command to the hardware search device, the search command based on the retrieved search space request; (c) retrieve a search result from the hardware search device; (d) determine whether satellite acquisition is complete based on the search result; (e) if the satellite acquisition is complete, send the acquisition results to the results queue; and (f) if the satellite acquisition is not complete: (i) determine whether more of the search space requests are available; (ii) if more of the search space requests are available, retrieve a next search space request from the search queue; (iii) send a next search command to the hardware search device, the next search command based on the next search space request; (iv) retrieve a next search result from the hardware search device; (v) determine whether satellite acquisition is complete based on the next search result; (vi) if the satellite acquisition is complete, send the acquisition results to the results queue; and (vii) if the satellite acquisition is not complete, repeat (i) to (vi) until the search queue is empty.

Example 6 includes the system of Example 5, wherein if a search space request is not available from the search queue, suspend searching until a search space request is available.

Example 7 includes the system of any of Examples 1-6, wherein the receiver controller is further configured to check validity of the search results with respect to frequency and magnitude of an acquired satellite signal.

Example 8 includes the system of Example 7, wherein the receiver controller is further configured to assign one or more baseband tracking channels to the acquired satellite signal.

Example 9 includes a method of searching for and acquiring a satellite signal, the method comprising: identifying one or more satellites for which a search is to be conducted; generating a search request for one or more of the identified satellites; dividing the search request into a plurality of smaller search space requests; commanding a hardware search device to search for the one or more satellites based on one of the smaller search space requests; retrieving a search result from the hardware search device; determining whether satellite acquisition is complete based on the search result; if the satellite acquisition is complete, storing acquisition results in a results queue; retrieving the acquisition results from the results queue; and tracking one or more satellites based on the acquisition results.

Example 10 includes the method of Example 9, further comprising checking for satellite search results when activating a receiver controller operatively coupled to the hardware search device.

Example 11 includes the method of any of Examples 9-10, wherein identifying one or more satellites further comprises constructing a list of satellites known to be visible.

Example 12 includes the method of any of Examples 9-11, wherein if the satellite acquisition is not complete: (i) determining whether more of the search space requests are available; (ii) if more of the search space requests are available, retrieving a next search space request from a search queue; (iii) sending a search command to the hardware search device, the search command based on the next search space request; (iv) retrieving a next search result from the hardware search device; (v) determining whether satellite acquisition is complete based on the next search result; (vi) if the satellite acquisition is complete, storing the acquisition results in the results queue; and (vii) if the satellite acquisition is not complete, repeating (i) to (vi) until the search queue is empty.

Example 13 includes the method of Example 12, wherein if a search space request is not available from the search queue, suspending searching until a search space request is available.

Example 14 includes the method of any of Examples 9-13, further comprising checking validity of the search results with respect to frequency and magnitude of an acquired satellite signal.

Example 15 includes the method of Example 14, further comprising assigning one or more baseband tracking channels to the acquired satellite signal.

Example 16 includes a computer program product, comprising: a non-transitory computer readable medium having instructions stored thereon executable by a processor to perform a method of searching for and acquiring a satellite signal, the method comprising: identifying one or more satellites for which a search is to be conducted; generating a search request for one or more of the identified satellites; dividing the search request into a plurality of smaller search space requests; commanding a hardware search device to search for the one or more satellites based on one of the smaller search space requests; retrieving a search result from the hardware search device; determining whether satellite acquisition is complete based on the search result; if the satellite acquisition is complete, storing acquisition results in a results queue; retrieving the acquisition results from the results queue; and tracking one or more satellites based on the acquisition results.

Example 17 includes the computer program product of Example 16, wherein identifying one or more satellites further comprises constructing a list of satellites known to be visible.

Example 18 includes the computer program product of any of Examples 16-17, wherein if the satellite acquisition is not complete: (i) determining whether more of the search space requests are available; (ii) if more of the search space requests are available, retrieving a next search space request from a search queue; (iii) sending a search command to the hardware search device, the search command based on the next search space request; (iv) retrieving a next search result from the hardware search device; (v) determining whether satellite acquisition is complete based on the next search result; (vi) if the satellite acquisition is complete, storing the acquisition results in the results queue; and (vii) if the satellite acquisition is not complete, repeating (i) to (vi) until the search queue is empty.

Example 19 includes the computer program product of any of Examples 16-18, wherein the method further comprises checking validity of the search results with respect to frequency and magnitude of an acquired satellite signal.

Example 20 includes the computer program product of Example 19, wherein the method further comprises assigning one or more baseband tracking channels to the acquired satellite signal.

Although specific embodiments have been illustrated and described herein, it will be appreciated by those of ordinary skill in the art that any arrangement, which is calculated to achieve the same purpose, may be substituted for the specific embodiments shown. The described embodiments are to be considered in all respects only as illustrative and not restrictive. The scope of the invention is therefore indicated by the following claims rather than by the foregoing description. All changes that come within the meaning and range of equivalency of the claims are to be embraced within their scope.

## Claims

1. A system of searching for and acquiring a satellite signal, the system comprising:
a system controller;
a receiver controller operatively coupled to the system controller and configured to identify one or more satellites for which a search is to be conducted;
a fast acquisition module in operative communication with the receiver controller, the fast acquisition module configured to receive a satellite search request from the receiver controller and divide the search request into a plurality of smaller search space requests;
a hardware search device in operative communication with the fast acquisition module and configured to conduct a search for a satellite based on one or more of the search space requests and send search results back to the fast acquisition module; and
a baseband processor operatively coupled to the receiver controller and configured to track one or more satellites based on the search results.

2. The system of claim 1, wherein the receiver controller is further configured:
construct a list of satellites known to be visible;
check for search results upon activation by the system controller; and
retrieve acquisition results from a results queue in the fast acquisition module.

3. The system of claim 2, wherein the fast acquisition module is further configured to:
(a) retrieve one of the smaller search space requests from a search queue;
(b) send a search command to the hardware search device, the search command based on the retrieved search space request;
(c) retrieve a search result from the hardware search device;
(d) determine whether satellite acquisition is complete based on the search result;
(e) if the satellite acquisition is complete, send the acquisition results to the results queue; and
(f) if the satellite acquisition is not complete:
(i) determine whether more of the search space requests are available;
(ii) if more of the search space requests are available, retrieve a next search space request from the search queue;
(iii) send a next search command to the hardware search device, the next search command based on the next search space request;
(iv) retrieve a next search result from the hardware search device;
(v) determine whether satellite acquisition is complete based on the next search result;
(vi) if the satellite acquisition is complete, send the acquisition results to the results queue; and
(vii) if the satellite acquisition is not complete, repeat (i) to (vi) until the search queue is empty.

4. The system of claim 3, wherein if a search space request is not available from the search queue, suspend searching until a search space request is available.

5. The system of claim 1, wherein the receiver controller is further configured to check validity of the search results with respect to frequency and magnitude of an acquired satellite signal.

6. The system of claim 5, wherein the receiver controller is further configured to assign one or more baseband tracking channels to the acquired satellite signal.

7. A method of searching for and acquiring a satellite signal, the method comprising:
identifying one or more satellites for which a search is to be conducted;
generating a search request for one or more of the identified satellites;
dividing the search request into a plurality of smaller search space requests;
commanding a hardware search device to search for the one or more satellites based on one of the smaller search space requests;
retrieving a search result from the hardware search device;
determining whether satellite acquisition is complete based on the search result;
if the satellite acquisition is complete, storing acquisition results in a results queue;
retrieving the acquisition results from the results queue; and
tracking one or more satellites based on the acquisition results.

8. The method of claim 7, further comprising checking for satellite search results when activating a receiver controller operatively coupled to the hardware search device.

9. The method of claim 7, wherein if the satellite acquisition is not complete:
(i) determining whether more of the search space requests are available;
(ii) if more of the search space requests are available, retrieving a next search space request from a search queue;
(iii) sending a search command to the hardware search device, the search command based on the next search space request;
(iv) retrieving a next search result from the hardware search device;
(v) determining whether satellite acquisition is complete based on the next search result;
(vi) if the satellite acquisition is complete, storing the acquisition results in the results queue; and
(vii) if the satellite acquisition is not complete, repeating (i) to (vi) until the search queue is empty.

10. The method of claim 7, further comprising:
checking validity of the search results with respect to frequency and magnitude of an acquired satellite signal; and
assigning one or more baseband tracking channels to the acquired satellite signal.
